(19) Europäisches Patentamt
European Patent Office
Office européen des brevets

(11) EP 4 279 521 A1

(12) **EUROPEAN PATENT APPLICATION**

(43) Date of publication:
**22.11.2023 Bulletin 2023/47**

(21) Application number: **22315103.6**

(22) Date of filing: **16.05.2022**

(51) International Patent Classification (IPC):
***C08G 18/10*** (2006.01) ***C08G 18/12*** (2006.01)
***C08G 18/24*** (2006.01) ***C08G 18/36*** (2006.01)
***C08G 18/42*** (2006.01) ***C08G 18/75*** (2006.01)

(52) Cooperative Patent Classification (CPC):
(C-Sets available)
**C08G 18/755; C08G 18/10; C08G 18/12; C08G 18/242; C08G 18/246; C08G 18/36; C08G 18/4277** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SOPREMA**
**67100 Strasbourg (FR)**

(72) Inventors:
- **Bindschedler, Pierre-Etienne**
  **67000 STRASBOURG (FR)**
- **Straub, Hugues**
  **68000 COLMAR (FR)**
- **Clement, Baptiste**
  **67640 LIPSHEIM (FR)**
- **Sarbu, Alexandru**
  **67300 SCHILTIGHEIM (FR)**
- **Perrin, Rémi**
  **67530 BOERSCH (FR)**

(74) Representative: **Cabinet Nuss**
**10, rue Jacques Kablé**
**67080 Strasbourg Cedex (FR)**

(54) **POLYURETHANE PREPOLYMERS**

(57) A method for preparing a polyurethane prepolymer, comprising the steps of:
(a) reacting polyisocyanate monomers with polyols, wherein when the polyisocyanate monomers comprise (cyclo)aliphatic polyisocyanate monomers, step (a) is performed in the presence of at least one organotin catalyst, and
(b) adding in the reaction medium obtained in step (a) at least one multifunctional coupling agent.

EP 4 279 521 A1

(52) Cooperative Patent Classification (CPC): (Cont.)

C-Sets
**C08G 18/10, C08G 18/289;**
**C08G 18/10, C08G 18/3296;**
**C08G 18/12, C08G 18/307**

## Description

FIELD OF THE INVENTION

The present invention relates to a method for preparing polyurethane prepolymers, having in particular a low residual free polyisocyanate monomers, and to a composition comprising such polyurethane prepolymers. These polyurethane prepolymers are useful for preparing compositions for coatings, adhesives, sealants and elastomers (CASE) applications, such as for example waterproofing applications.

DESCRIPTION OF RELATED ART

Polyurethanes count among the most polyvalent commercial materials. Thermosetting or thermoplastic, polyurethanes are used in a large number of industries. For example, they can be used to form flexible foams particularly used in furnishings and in the automobile industry or rigid foams used as insulators in building construction or electric household appliances. Polyurethanes also enter into the composition of many adhesives, lacquers, varnishes, paints, etc.

Many methods for preparing polyurethanes have been developed. For example, polyurethanes can be prepared in a single step by mixing the various polymer components, eventually in the absence of solvent. They can also be prepared from polyurethane prepolymers, i.e. isocyanate-terminated polyurethane prepolymers, formed by reaction between an polyisocyanate, typically employed in large excess, and a polyol. In this latter method, the reaction of the prepolymer with a chain extender and/or a crosslinking agent leads to the formation of polyurethane. Polyurethane prepolymers prepared conventionally generally contain a significant proportion of unreacted polyisocyanate monomers, referred to herein as "residual free polyisocyanate monomers".

Polyisocyanates are toxic compounds. At high concentrations, they can irritate the skin and the mucous membranes. Continuous exposure to low concentrations can, as for it, be at the origin of a sensitization leading to skin or respiratory allergies. Certain polyisocyanates even prove to be carcinogenic. Their penetration into the organism occurs mainly via the respiratory tract in vapor or aerosol form. Thus, polyisocyanates having a high volatility at room temperature are proved to be particularly noxious.

Since the coming into force of the REACH regulation of the European Union, certain chemical substances or groups of chemical substances are for certain uses subject to marketing and use restrictions. In particular, since December 2010, the marketing of products containing more than 0.1 wt% of residual free diisocyanate monomers, such as methylene diphenyl diisocyanate (MDI), toluene diisocyanate (TDI), hexamethylene diisocyanate (HDI), hydrogenated MDI ($H_{12}$MDI), isophorone diisocyanate (IPDI), p-phenylene diisocyanate (PPDI) trans-1,4-cyclohexane diisocyanate (CHDI), and naphthalene diisocyanate (NDI), is strictly regulated.

Furthermore, other than the health problems they can cause, residual free polyisocyanate monomers present in polyurethane prepolymers can alter the properties of the polyurethanes formed from these prepolymers. Indeed, residual free polyisocyanate monomers can react with chain extenders creating isolated rigid segments at the origin of phase separation problems.

To overcome these disadvantages and to reduce health risks, efforts have been undertaken to reduce the residual free polyisocyanate monomers contents in polyurethane prepolymers. Residual free polyisocyanate monomers are generally removed by vacuum distillation, notably thin film distillation process or short path evaporation, giving rise to substantial additional preparation costs.

There is thus a need to have a method for obtaining polyurethane prepolymers having a low residual free polyisocyanate monomers content at a lower cost.

BRIEF DESCRIPTION OF THE INVENTION

An object of the present invention is a method for preparing a polyurethane prepolymer, in particular having a residual free polyisocyanate monomers content of less than or equal to 2.8 wt% (with respect to the total weight of the polyurethane prepolymer), comprising the steps of:

(a) reacting polyisocyanate monomers, and in particular diisocyanate monomers, with polyols, wherein when the polyisocyanate monomers comprise (cyclo)aliphatic polyisocyanate monomers, an in particular when the diisocyanate monomers comprise (cyclo)aliphatic diisocyanate monomers, step (a) is performed in the presence of at least one organo-metallic catalyst, preferably at least one organotin catalyst, and
(b) adding in the reaction medium obtained in step (a) at least one multifunctional coupling agent.

In the present description, the term "polyurethane prepolymer" means "isocyanate-terminated polyurethane prepolymer"; the term "(cyclo)aliphatic" means "aliphatic or cycloaliphatic"; and the term "reaction medium obtained in

step (a)" means "reaction medium resulting from step (a)".

Another object of the present invention is a polyurethane prepolymer as obtained according to the method of the invention, having less than or equal to 2.8 wt%, preferably less than or equal to 2.5 wt%, more preferably less than or equal to 2.0 wt%, even more preferably less than or equal to 1.5 wt%, for example less than or equal to 1.0 wt%, of residual free polyisocyanate monomers (with respect to the total weight of the polyurethane prepolymer).

Another object of the present invention is a composition comprising a polyurethane prepolymer according to the invention or as obtained according to the method of the invention, and a solvent and/or a plasticizer, wherein the amount of the polyurethane prepolymer in the composition is such that the amount of free polyisocyanate monomers in the composition is equal or below 0.5 wt% (with respect to the total weight of the composition).

Another object of the present invention is a coating, adhesive, sealant or elastomer obtained by curing the composition of the invention.

Another object of the present invention is the use of the composition of the invention for waterproofing applications, such as on roofs, balconies, terraces, bathrooms and kitchens.

## DETAILED DESCRIPTION OF THE INVENTION

In the context of the present invention, the inventors have shown that a polyurethane prepolymer having a residual free polyisocyanate monomers content of less than or equal to 2.8 wt%, preferably less than or equal to 2.5 wt%, more preferably less than or equal to 2.0 wt%, even more preferably less than or equal to 1.5 wt%, for example less than or equal to 1.0 wt%, relative to the total weight of the polyurethane prepolymer could be prepared by a method comprising the steps of:

(a) reacting polyisocyanate monomers with polyols, wherein when the polyisocyanate monomers comprise (cyclo)aliphatic polyisocyanate monomers, step (a) is performed in the presence of at least one organo-metallic catalyst, preferably at least one organotin catalyst, and
(b) adding in the reaction medium obtained in step (a) at least one multifunctional coupling agent.

Advantageously, the method according to the invention does not include a distillation step. Thus, the polyurethane prepolymer may be recovered directly after carrying out steps a) and b).

Preferably, step (b) is performed after step (a). In particular, step (b) is performed when the first theoretical %NCO is reached in the reaction medium obtained in step (a), i.e. when the reaction between polyols and polyisocyanate monomers is finished.

The first theoretical %NCO can be determined as per common calculation method known by the person skilled in the art. Such calculation is given by the following formula:

$$\begin{aligned}\text{First theoretical \%NCO} &= \text{Mw (NCO)} \times (\text{n (polyisocyanates)} - \text{n (polyols)})\\ &= \text{Mw (NCO)} \times (\text{wt\%(polyisocyanates)} / \text{Meq (polyisocyanates)} - \text{wt\%(polyols)} / \text{Meq (polyols)})\\ &= \text{Mw (NCO)} \times (\text{wt\%(polyisocyanates)} / \text{Mw(polyisocyanates)} \times \text{f(polyisocyanates)} - \text{wt\%(polyols)} / \text{Mw (polyols)} \times \text{f(polyols)}).\end{aligned}$$

Mw (NCO) is the molecular weight of the isocyanate functional group, equals to 42. The value of n is the equivalent molar quantity comprised in the reaction medium. Meq is the equivalent molecular weight. Mw is the molecular weight. The value of f is the functionality.

The time needed to reach the first theoretical %NCO in step (a) may be in the range of 30 min to 4 h, preferably of 30 min to 2 h.

Steps (a) and (b) may be performed under an inert gas, such as nitrogen gas. This may enable to avoid reactions with ambient humidity.

Steps (a) and (b) may be performed at a temperature ranging from 50°C to 110°C, preferably from 70°C to 90°C.

Steps (a) and (b) may be performed under stirring.

The method may comprise a step (c) of cooling the reaction medium obtained in step (b).

In the present description, the term "reaction medium obtained in step (b)" means "reaction medium resulting

from step (b)".

Preferably, step (c) is performed when the second theoretical %NCO is reached in the reaction medium obtained in step (b).

The second theoretical %NCO can be determined by the following formula:

Second theoretical %NCO

= Mw (NCO) x (n (polyisocyanates) - n (polyols and multifunctional coupling agent)) = Mw (NCO) x (wt%(polyisocyanates) / Meq (polyisocyanates) - wt%(polyols and multifunctional coupling agent) / Meq (polyols and multifunctional coupling agent))

= Mw (NCO) x (wt%(polyisocyanates) / Mw(polyisocyanates) x f(polyisocyanates) - wt%(polyols and multifunctional coupling agent) / Mw (polyols and multifunctional coupling agent) x f(polyols and multifunctional coupling agent)).

The time needed to reach the second theoretical %NCO in step (b) may be in the range of 15 min to 1 h, preferably of 25 min to 35 min.

The %NCO may be measured in step (a) and/or (b) by conventional titration process according to the ASTM 2572 standard to follow the progress of the reaction, respectively in step (a) and/or (b).

The method may comprise a step (d) of recovering the polyurethane prepolymer obtained in step (b) or (c).

The method may comprise a step I of storing the polyurethane prepolymer recovered in step (d) in an air-tight container, such as a drum, intermediate bulk container (IBC) or bucket, preferably purged with an inert gas, such as nitrogen gas, to prevent moisture pick-up from the atmosphere.

The viscosity of the polyurethane prepolymer may be lower than 300 Poise (notably from 1 to 300 Poise), preferably from 5 to 250 Poise, more preferably from 5 to 230 Poise.

The viscosity of the polyurethane prepolymer is measured at a temperature of 23°C with a Brookfield viscosimeter using a Spindle N°3 and a rotation speed at 20 rpm, 7 days after its preparation.

The polyurethane prepolymer as obtained according to the method of the present invention may have a residual free polyisocyanate monomers content less than or equal to 2.8 wt%, 2.7 wt%, 2.6 wt%, 2.5 wt%, 2.4 wt%, 2.3 wt%, 2.2 wt%, 2.1 wt%, 2.0 wt%, 1.9 wt%, 1.8 wt%, 1.7 wt%, 1.6 wt%, 1.5 wt%, 1.4 wt%, 1.3 wt%, 1.2 wt%, 1.1 wt%, or 1.0 wt% (with respect to the total weight of the polyurethane prepolymer).

It is the use of the multifunctional coupling agent which allows to obtain a polyurethane prepolymer with such a low amount of residual free polyisocyanate monomers.

The residual free polyisocyanate monomers content in the polyurethane prepolymer was determined by Size Exclusion Chromatography (SEC), 7 days after the preparation of the polyurethane prepolymer.

The SEC analyzes were carried out using a chromatograph Malvern's Viskotek GPC Max. The chromatography column was LT 3000L (Mixed Ultra low) from Malvern and the stationary phase was a styrene-divinyl benzene copolymer. The detector was a refractive index (RI) detector Viskotek VE 3580 from Malvern. The SEC analyzes were carried out at room temperature. The eluant medium was tetrahydrofuran (THF) with a flow rate of 1 mL/min. The injection volume was 100 μL. Calibration curves were obtained by measuring by SEC the RI area of polyisocyanate monomers samples of different known concentrations. Then, the RI area of residual free polyisocyanate monomers in the polyurethane prepolymer sample was measured by SEC 7 days after the preparation of the polyurethane prepolymer, and the measured RI area was referred to the calibration curve so that the residual free polyisocyanate monomers content in the polyurethane prepolymer could be determined. For example, data used for obtaining the calibration curve using 3-isocyanatomethyl-3,5,5-trimethylcyclohexylisocyanate (also called isophorone diisocyanate or IPDI) as polyisocyanate monomers are presented in the table below.

| IPDI sample | IPDI concentration (mg/mL) | Injected Volume (μL) | Injected Mass (μg) | Measured RI Area |
|---|---|---|---|---|
| #1 | 5 | 100 | 500 | 144,46 |

(continued)

| IPDI sample | IPDI concentration (mg/mL) | Injected Volume (μL) | Injected Mass (μg) | Measured RI Area |
|---|---|---|---|---|
| #2 | 8 | 100 | 800 | 233,38 |
| #3 | 4,01 | 100 | 401 | 109,78 |
| #4 | 2 | 100 | 200 | 57,58 |

Polyisocyanate monomers

The polyisocyanate monomers may be selected from (cyclo)aliphatic polyisocyanate monomers, aromatic polyisocyanate monomers, and mixtures thereof.

Preferably, the polyisocyanate monomers are selected from diisocyanate monomers.

The diisocyanate monomers may be selected from (cyclo)aliphatic diisocyanate monomers, aromatic diisocyanate monomers, and mixtures thereof.

The (cyclo)aliphatic diisocyanate monomers can be selected from 3-isocyanatomethyl-3,5,5-trimethylcyclohexylisocyanate (also called isophorone diisocyanate or IPDI), methyl 2,6-diisocyanatohexanoate, L-lysine methyl ester diisocyanate, ethyl 2,6-diisocyanatohexanoate, L-lysine ethyl ester diisocyanate, 1,6-diisocyanato-2,4,4-trimethylhexane, 1,6-diisocyanato-2,2,4-trimethylhexane, 2-methylpentamethylenediisocyanate, 2,4-diisocyanato-1-methylcyclohexane, 2,4-dicyclohexylmethane diisocyanate, 1,5-pentamethylene diisocyanate (PDI), hexamethylene diisocyanate (HDI), 4,4'-methylenedicyclohexyl diisocyanate ($H_{12}$MDI), trans-1,4-cyclohexane diisocyanate (CHDI), and mixtures thereof.

The aromatic diisocyanate monomers can be selected from 1,3-tetramethylxylylene diisocyanate (1,3-TMXDI), 1,4-tetramethylxylylene diisocyanate (1,4-TMXDI) or mixtures thereof; methylene diphenyl diisocyanate (MDI), such as 4,4'-Methylenebis(phenyl isocyanate) (4,4'-MDI), 2,4'-Methylenebis(phenyl isocyanate) (2,4'-MDI), 2,2'-Methylenebis(phenyl isocyanate) (2,2'-MDI) or mixtures thereof; toluene diisocyanate (TDI), such as 2,4-diisocyanato-1-méthylbenzène (2,4-TDI), 2,6-diisocyanato-1-méthylbenzène (2,6-TDI) or mixtures thereof; phenylene diisocyanate (PPDI), such as 1,2-Phenylene diisocyanate (1,2-PPDI), 1,3-Phenylene diisocyanate (1,3-PPDI), 1,4-Phenylene diisocyanate (1,4-PPDI) or mixtures thereof; 1,5-naphthalene diisocyanate (NDI); xylene diisocyanate (XDI); and mixtures thereof.

In one preferred embodiment, the polyisocyanate monomers are selected from isophorone diisocyanate (IPDI), 4,4'-Methylenebis(phenyl isocyanate) (4,4'-MDI), 2,4'-Methylenebis(phenyl isocyanate) (2,4'-MDI), or mixtures thereof.

The polyisocyanate monomers may be selected from a mixture comprising (cyclo)aliphatic polyisocyanate monomers and aromatic polyisocyanate monomers, preferably a mixture comprising (cyclo)aliphatic diisocyanate monomers and aromatic diisocyanate monomers. In this case, the quantity of the aromatic polyisocyanate monomers may be below or equal to 15 wt% (notably from 0.1 to 15 wt%), preferably from 0 to 5 wt% (notably from 0.1 to 5 wt%), more preferably from 0 to 2 wt% (notably from 0.1 to 2 wt%), and even more preferably from 0 to 1 wt% (notably from 0.1 to 1 wt%), with respect to the total weight of the polyisocyanate monomers of the mixture.

Polyols

The polyols have preferably an average functionality ranging from about 1.9 to about 4.0, preferably from about 1.95 to about 3.5, more preferably from about 1.95 to about 3.4. In particular, the polyols have preferably an overall functionality ranging from about 1.95 to about 2.1 (diol) or from about 2.0 to about 3.4(triol).

The polyols are preferably terminated with primary hydroxyl groups.

The polyols are preferably diols or triols.

The polyols, preferably diols or triols, may be selected from polyester polyols, such as poly-(ε-caprolactone) polyols, for example poly-(ε-caprolactone) diols or triols; polyether polyols, such as polyethylene glycol (PEG), polypropylene glycol (PPG), polypropylene triglycerides glycol trimethylolpropane triether (PPG-TMP), polypropylene glycol-co-polyethylene glycol (PPG-co-PEG), polytetrahydrofuran (PTHF); polycarbonate polyols, such as KURARAY POLYOL™ C-2090; dihydroxy or trihydroxy triglycerides, such as triglycerides containing two or three hydroxy fatty acids (HFAs) such as ricinoleic acid or 12-hydroxy stearic acid, for example ricinolein (i.e. a triglyceride of ricinoleic acid which is the prevalent triglyceride in castor oil); dimer of hydroxy fatty acids (HFAs) such as ricinoleic acid or 12-hydroxy stearic acid, for example dimer diol Pripol™ from Croda Coatings & Polymers; hydrocarbon polyols; polybutadiene polyols, such as KRASOL® LBH-P 2000; polyolefin polyols; vegetable oils having hydroxyl groups or vegetable oils into which hydroxyl groups have been introduced by chemical modification, e.g. soybean oil or castor oil; and combinations thereof.

The polyols are for example selected from ricinolein, having notably an average functionality of 2.7. Ricinolein is the major component triglyceride of castor oil.

In one preferred embodiment, the polyols are selected from poly-(ε-caprolactone) triols, ricinolein or castor oils, tripropylene glycol (TPG), polytetrahydrofuran (PTHF), and mixtures thereof.

The polyols can comprise main polyols (a) and eventually additional polyols (b):

(a) polyols having a number average molecular weight greater than 500 g/mol, preferably ranging from 500 g/mol to 12,000 g/mol, more preferably ranging from 500 g/mol to 5,000 g/mol;
(b) polyols having a number average molecular weight below 500 g/mol, preferably ranging from 50 g/mol to 500 g/mol.

The main polyols (a) may be as herein above defined.

The main polyols (a) may comprise a mixture of at least two different polyols having a number average molecular weight greater than 500 g/mol, preferably ranging from 500 g/mol to 12,000 g/mol, more preferably ranging from 500 g/mol to 5,000 g/mol.

Preferably, the additional polyols (b) are diols or triols.

Preferably, the additional polyols (b) are selected from aliphatic glycols, such as monoethylene glycol, diethylene glycol, triethylene glycol, tetraethylene glycol, monopropylene glycol, dipropylene glycol, tripropylene glycol, 1,3-butanediol, 1,4-butanediol, 1,3-propanediol, neopentyl glycol; aliphatic triols, such as glycerol, trimethylol-propane, trimethylolethane; and mixtures thereof.

The quantity of the additional polyols (b) is generally below than or equal to 20 wt% (notably from 0.1 to 20 wt%), preferably from 0 to 15 wt% (notably from 0.1 to 15 wt%), more preferably from 0 to 10 wt% (notably from 0.1 to 10 wt%) and even more preferably from 0 to 5 wt% (notably from 0.1 to 5 wt%), with respect to the total weight of the polyols.

The polyisocyanate monomers and polyols may be selected from the following combinations:

- isophorone diisocyanate (IPDI) and/or 4,4'-Methylenebis(phenyl isocyanate) (4,4'-MDI) and/or 2,4'-Methylenebis(phenyl isocyanate) (2,4'-MDI) with poly-(ε-caprolactone) triol;
- isophorone diisocyanate (IPDI) and/or 4,4'-Methylenebis(phenyl isocyanate) (4,4'-MDI) and/or 2,4'-Methylenebis(phenyl isocyanate) (2,4'-MDI) with castor oil; and
- isophorone diisocyanate (IPDI) and/or 4,4'-Methylenebis(phenyl isocyanate) (4,4'-MDI) and/or 2,4'-Methylenebis(phenyl isocyanate) (2,4'-MDI) with a mixture comprising tripropylene glycol (TPG) and polytetrahydrofuran (PTHF).

Preferably, the polyisocyanate monomers and polyols may be selected from the following combinations:

- isophorone diisocyanate (IPDI) with poly-(ε-caprolactone) triol;
- isophorone diisocyanate (IPDI) with castor oil; and
- 4,4'-Methylenebis(phenyl isocyanate) (4,4'-MDI) and/or 2,4'-Methylenebis(phenyl isocyanate) (2,4'-MDI) with a mixture comprising tripropylene glycol (TPG) and polytetrahydrofuran (PTHF).

<u>Organo-metallic catalyst</u>

When the polyisocyanate monomers comprise (cyclo)aliphatic polyisocyanate monomers, an in particular when the diisocyanate monomers comprise (cyclo)aliphatic diisocyanate monomers, step (a) is performed in the presence of at least one organo-metallic catalyst.

The use of the organo-metallic catalyst may enable to overcome the lower electrophilic character and therefore lower reactivity of (cyclo)aliphatic polyisocyanate monomers compared to aromatic polyisocyanate monomers.

The organo-metallic catalyst is preferably an organotin catalyst.

It is particularly advantageous to use an organotin catalyst because compared to organo-metallic catalysts based on other metallic elements such as organo-bismuth or organo-zinc catalysts for example, the organotin catalyst not only acts as a kinetic catalyst to accelerate the reaction between (cyclo)aliphatic polyisocyanate monomers and polyols but also as a selectivity enhancer to improve the selectivity (i.e. the difference of reactivity) between the isocyanate groups of the (cyclo)aliphatic polyisocyanate monomer.

The organotin catalyst is preferably a tetravalent organotin catalyst.

It is particularly advantageous to use a tetravalent organotin catalyst because compared to organotin catalyst having a different metal valence such as divalent organotin catalyst for example, the tetravalent organotin catalyst enables to further improve the selectivity between the isocyanate groups of the (cyclo)aliphatic polyisocyanate monomer.

The organo-metallic catalyst may comprise at least one alkyl group, and preferably four alkyl groups, each alkyl group comprising at least 4 carbon atoms, preferably comprising from 4 to 20 carbon atoms, more preferably comprising from 4 to 17 carbon atoms, such as n-butyl, n-octyl, n-undecyl, n-dodecyl, n-tridecyl, n-tetradecyl, n-pentadecyl, hexadecyl or n-heptadecyl group.

It is particularly advantageous to use such a tetravalent organotin catalyst because it enables to further improve

the selectivity between the isocyanate groups of the (cyclo)aliphatic polyisocyanate monomer, compared to tetravalent organotin catalysts comprising one or more methyl groups for example.

The tetravalent organotin catalyst may be represented by the formula (I):

$$(R1)_2\text{-Sn(IV)-}(R3\text{-}R2)_2 \qquad (I)$$

wherein

R1 is an alkyl group comprising at least 4 carbon atoms, preferably comprising from 4 to 8 carbon atoms;
R2 is an alkyl group comprising at least 8 carbon atoms, preferably comprising from 8 to 20 carbon atoms, more preferably from 10 to 18 carbon atoms; and R3 is an -O-(C=O)- or -S- group.

More preferably, R1 is an n-butyl or n-octyl group and R2 is an n-undecyl, n-dodecyl, n-tridecyl, n-tetradecyl, n-pentadecyl, hexadecyl or n-heptadecyl or group.

In one preferred embodiment, the tetravalent organotin catalyst is selected from dibutyltin dilaurate (DBTL), dioctyltin dilaurate (DOTL), bis-dodecylthio-dioctylstannane, and mixtures thereof.

The amount of the organo-metallic catalyst may be below 1000ppm, preferably below 500 ppm, more preferably below 400ppm, with respect to the total weight of the reaction medium obtained in step (b).

In particular, the amount of the organo-metallic catalyst is in the range of 50ppm to 1000ppm, preferably of 50ppm to 500ppm, more preferably of 50ppm to 400ppm, with respect to the total weight of the reaction medium obtained in step (b).

In one preferred embodiment, the amount of the organo-metallic catalyst is about 300ppm with respect to the total weight of the reaction medium obtained in step (b).

Optionally, at least one additional catalyst can be added with the organo-metallic catalyst in step (a) when the polyisocyanate monomers comprise (cyclo)aliphatic polyisocyanate monomers. The additional catalyst is preferably different from the organo-metallic catalyst.

Thus, when the polyisocyanate monomers comprise (cyclo)aliphatic polyisocyanate monomers, step (a) may be performed in the presence of a mixture comprising at least one organo-metallic catalyst and at least one additional catalyst.

The use of the additional catalyst may enable to further improve the selectivity between the isocyanate groups of the (cyclo)aliphatic polyisocyanate monomer. Thus, the mixture comprising at least one organo-metallic catalyst and at least additional catalyst may have a synergistic effect.

The additional catalyst is preferably selected from tertiary amines.

Examples of suitable tertiary amines include 2,2'-dimorpholinodiethylether (DMDEE); morpholine based amines, such as N-ethylmorpholine; N-t-butylmorpholine, N-methylmorpholine, N-butylmorpholine, hydroxyethylmorpholine, 4-(2-methoxyethyl-)morpholine; non-morpholine based amines, such as Bis-(2-dimethylaminoethyl)ether; triethylenediamine, N-(3-dimethylaminopropyl)-N,N-diisopropanolamine, N,N-bis(3-dimethylaminopropyl-N-isopropanolamine, 2-((2-(2-(dimethylamino)ethoxy)ethyl) methylamino)ethanol, 2,11-dimethyl-2,11-diaza-5,8-dioxa-dodecan, benzyldimethylamine, dimethylpiperzine, pentamethyldiethylenetriamine, pentamethyldipropylenetriamine , N,N,N'-trimethyl-N'-hydroxyethylethanediamine-1,2, 1,3,5-tris-(3-dimethylaminopropyl-)hexahydro-s-triazine, dimethylethanolamine, tetramethyldipropylenetriamine, N,N-dimethyl-2(2-aminoethoxy)ethanol; and combinations thereof.

In one preferred embodiment, the additional catalyst is selected from 2,2'-dimorpholinodiethylether (DMDEE).

The amount of the additional catalyst may be below 2000ppm, with respect to the total weight of the reaction medium obtained in step (b).

In particular, the amount of the additional catalyst is in the range of 50ppm to 2000ppm, preferably of 500ppm to 1500ppm, more preferably of 700ppm to 1100ppm, with respect to the total weight of the reaction medium obtained in step (b).

In one preferred embodiment, the amount of the additional catalyst is about 900ppm with respect to the total weight of the reaction medium obtained in step (b).

Multifunctional coupling agent

The polyisocyanate monomers, the polyols and the multifunctional coupling agent may be in such a quantity in the reaction medium obtained in step (b) that the molar ratio n(polyisocyanate monomers) / n(polyols + multifunctional coupling agent)is in the range of 1.5:1 to 3.0:1, preferably of 1.5:1 to 2.5:1, more preferably of 1.5:1 to 2.3:1, and even more preferably of 1.5:1 to 2.2:1. Thus, in step (b), the polyisocyanate monomers are preferably in a molar excess relative to sum of the polyols and multifunctional coupling agent.

The multifunctional coupling agent may be capable of reacting with isocyanate functional group of the residual

free polyisocyanate monomer. Thus, the multifunctional coupling agent may enable to partially cap the residual free polyisocyanate (end-capper function) and therefore to reduce the residual free polyisocyanate monomers content of the polyurethane prepolymer.

The multifunctional coupling agent may comprise at least one reactive functional group capable of reacting with an isocyanate functional group of a residual free polyisocyanate monomer and at least one additional reactive functional group sensitive to temperature, oxygen and/or moisture.

The reactive functional group capable of reacting with an isocyanate functional group of a residual free polyisocyanate monomer may be selected from functional groups containing labile hydrogen atom(s) or epoxy groups.

The functional groups containing labile hydrogen atom(s) may be selected from thiol (-SH), primary amino ($-NH_2$), secondary amino (-NH-R), ureido ($-NH-CO-NH_2$) and hydroxyl (-OH) groups.

The additional reactive functional group is preferably moisture-sensitive. Thus, after having partially capped the residual free polyisocyanate monomer, the multifunctional coupling agent may undergo a reaction with humidity at ambient temperature to enable the curing of the polyurethane prepolymer.

The additional reactive functional group, in particular the moisture-sensitive additional reactive functional group, may be selected from oxazolidines and derivatives thereof, alkoxysilanes and mixtures thereof.

The multifunctional coupling agent may be selected from:

- oxazolidines and derivatives thereof functionalized with an epoxy group or with a functional group containing labile hydrogen atom(s), such as a thiol, primary amino, secondary amino, ureido or hydroxyl group;
- alkoxysilanes functionalized with an epoxy group or with a functional group containing labile hydrogen atom(s), such as a thiol, primary amino, secondary amino, ureido or hydroxyl group; and
- mixtures thereof.

It has been surprisingly found that an oxazolidine or a derivative thereof functionalized with an epoxy group or with a functional group containing labile hydrogen atom(s) can react with an isocyanate functional group of a residual free polyisocyanate monomer via its reactive functional group capable of reacting with an isocyanate functional group of a residual free polyisocyanate monomer (i.e. via its functional group containing labile hydrogen atom(s) or with its epoxy group), without the need to revert the reaction. Indeed, such oxazolidine or derivative thereof can react subsequently with humidity and undergoes a ring-opening reaction to form an end group comprising amino and hydroxyl functions. The amino and hydroxyl functions of the end group can each further react with an isocyanate end group of the polyurethane prepolymer.

The oxazolidine and derivative thereof functionalized with an epoxy group or with a functional group containing labile hydrogen atom(s) may be represented by the formula (II):

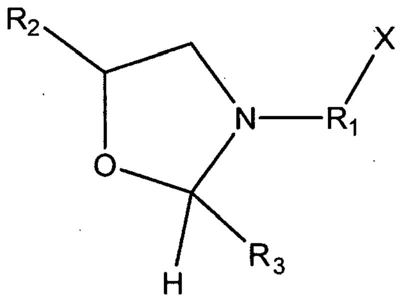

(II)

wherein

$R_1$ is a cyclic, linear or branched C1-C10 alkyl, eventually substituted with at least one heteroatom, $R_1$ is preferably a linear C1-C4 alkyl;
$R_2$ is a hydrogen atom or a cyclic, linear or branched C1-C10 alkyl, eventually substituted with at least one heteroatom, $R_2$ is preferably a hydrogen atom or a linear C1-C4 alkyl;
$R_3$ is a hydrogen atom or a cyclic, linear or branched C1-C10 alkyl, eventually substituted with at least one heteroatom, $R_3$ is preferably a linear or branched C2-C8 alkyl; and
X is a thiol, a primary amino, a secondary amino, a ureido, a hydroxyl or an epoxy group, preferably X is a thiol, a secondary amino, a ureido or a hydroxyl group.

In one preferred embodiment, the compound of formula (II) is selected from 3-Oxazolidineethanol, 2-(1-methylethyl)- (also called 2-Isopropyl-1,3-oxazolidine-3-ethanol, and found for example under the commercial reference Incozol 3 (13) from Incorez).

For example, in case the residual free polyisocyanate monomer is isophorone diisocyanate (IPDI) and the multifunctional coupling agent is 3-Oxazolidineethanol, 2-(1-methylethyl)- (13), I3 reacts with one of the two NCO groups of IPDI, and preferably with the most reactive NCO group of IPDI, to form IPDI-I3 according to the following reaction:

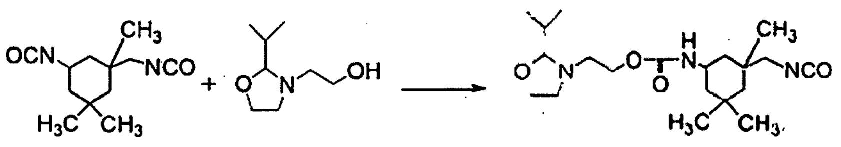

IPDI I3 IPDI-I3

Subsequently, in presence of atmospheric moisture, IPDI-I3 undergoes a ring-opening reaction according to the following reaction, yielding amino (NH) and hydroxyl (OH) functions with the ability to each further react with an isocyanate end group of the polyurethane prepolymer:

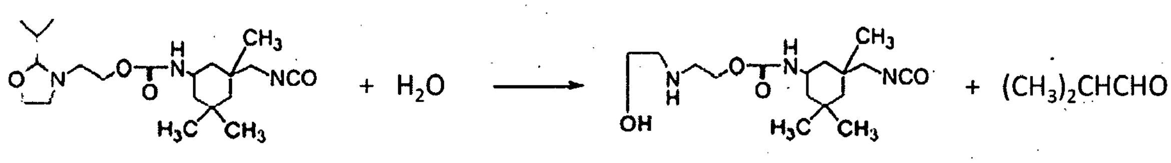

IPDI-I3

Preferably, the oxazolidine and derivative thereof functionalized with an epoxy group or with a functional group containing labile hydrogen atom(s) has a number average molecular weight from 50 g/mol to 250 g/mol, preferably from 140 g/mol to 180 g/mol, more preferably, from 150 g/mol to 170 g/mol.

The alkoxysilane functionalized with an epoxy group or with a functional group containing labile hydrogen atom(s) may be represented by the formula (III) :

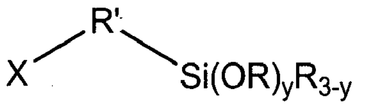

(III)

wherein

- each R is independently a linear or branched C1-C20 alkyl, preferably a methyl or ethyl, more preferably a methyl;
- R' is a linear or branched C1-C20 alkyl, preferably a methyl, ethyl or propyl, more preferably a methyl or propyl;
- y is 1, 2 or 3, preferably y is 2 or 3, more preferably y is 3; and
- X is a thiol, a primary amino, a secondary amino, a ureido, a hydroxyl or an epoxy group, preferably X is a thiol, a secondary amino, a ureido or a hydroxyl group.

The alkoxysilane functionalized with an epoxy group or with a functional group containing labile hydrogen atom(s) may be selected from dialkoxysilanes or trialkoxysilanes, more preferably trialkoxysilanes, functionalized with an epoxy group or with a functional group containing labile hydrogen atom(s).

The alkoxysilane functionalized with an epoxy group or with a functional group containing labile hydrogen atom(s) may be selected from methoxysilanes or ethoxysilanes, preferably methoxysilanes, functionalized with an epoxy group or with a functional group containing labile hydrogen atom(s).

In one preferred embodiment, the alkoxysilane functionalized with an epoxy group or with a functional group containing labile hydrogen atom(s) is selected from dimethoxysilanes, diethoxysilanes, trimethoxysilanes or triethoxysilanes, preferably from trimethoxysilanes, functionalized with an epoxy group or with a functional group containing labile hydrogen atom(s).

In one preferred embodiment, the compound of formula (III) is selected from 3-Mercaptopropyl-trimethoxysilane (found for example under the commercial reference Silquest™ A189 from Momentive), 3-phenylamino propyltrimethoxysilane (found for example under the commercial reference Silquest™ Y9669 from Momentive), N-(n-Butyl)-3-aminopropyltrimethoxysilane, or gamma-ureidopropyltrimethoxysilane (found for example under the commercial reference Silquest™ A1524 from Momentive).

Preferably, the alkoxysilane functionalized with an epoxy group or with a functional group containing labile hydrogen atom(s) has a number average molecular weight from 50 g/mol to 500 g/mol, preferably from 100 g/mol to 300 g/mol, more preferably, from 150 g/mol to 280 g/mol.

In one preferred embodiment, the multifunctional coupling agent is selected from 3-Oxazolidineethanol, 2-(1-methylethyl)-; N-(n-Butyl)-3-aminopropyltrimethoxysilane; 3-Mercaptopropyl-trimethoxysilane; 3-phenylamino propyltrimethoxysilane; and mixtures thereof,

The amount of the multifunctional coupling agent may be below or equal to 15 wt% (notably in the range of 0.1 to 15 wt %), with respect to the total weight of the reaction medium obtained in step (b). It is preferably in the range of 0.5 wt% to 12 wt%, more preferably in the range of 1 wt% to 11 wt%, with respect to the total weight of the reaction medium obtained in step (b).

Solvent and/or plasticizer

Step (a) can be performed in a solvent and/or a plasticizer.

The solvent can be selected from hydrocarbons, esters or ethers, such as acetyl acetone, mesityloxide, cyclohexanone, methylcyclohexanone, ethyl acetate, propyl acetate, 1-methoxy-2-propylacetate (PMA), butyl acetate, diethyl malonate, diisopropylether, diethylether, dibutylether, ethylene glycol diethylether, diethylene glycol diethylether, toluene, xylene, heptane, octane, diisopro-pylnaphthalenes and petroleum fractions, such as naphtha, white spirits and petroleum ethers, such as Solvesso™ solvents (from Exxon), hydrogenated aromatic solvents such as hydrogenated naphtha, methylene chloride, propylene carbonate, butyrolactone, N-methyl-pyrrolidone, N-ethyl-pyrrolidone, and mixtures thereof.

In one preferred embodiment, the solvent is selected from 1-methoxy-2-propylacetate (PMA), xylene, and mixtures thereof.

The plasticizer can be selected from esters of organic carboxylic acids, more particularly phthalates such as dioctyl phthalate or diisodecyl phthalate, hydrogenated phthalates such as diisononyl 1,2-cyclohexanedicarboxylate, adipates such as dioctyl adipate, succinates, azelates and sebacates, or esters of organic phosphoric and sulfonic acids, or hydrocarbons such as polybutenes or polyisobutenes, or mixtures thereof.

In one preferred embodiment, the plasticizer is selected from dioctyl phthalate, diisodecyl phthalate, dioctyl adipate, and mixtures thereof.

The total amount of solvent and plasticizer is preferably in the range from 5 wt% to 40 wt%, preferably from 10 wt% to 40 wt%, more preferably from 15 wt% to 40 wt%, and even more preferably from 15 wt% to 35 wt%, with respect to the total weight of the reaction medium obtained in step (b).

Composition comprising the polyurethane prepolymer as obtained according to the method of the invention

Another object of the present invention is a composition comprising the polyurethane prepolymer as obtained according to the method of the invention, and a solvent and/or a plasticizer, the amount of the polyurethane prepolymer in the composition being such that the amount of free polyisocyanate monomers in the composition is equal or below 0.5 wt%.

When the composition comprises an amount of free polyisocyanate monomers equal or below 0.5 wt%, the user needs to wear personal protective equipment, such as gloves, to manipulate the composition, according to the current European legislation

The polyurethane prepolymer as obtained according to the method of the invention may be present in the composition in an amount ranging from 25 wt% to 70 wt%, more preferably ranging from 30 wt% to 65 wt%, with respect to the total weight of the composition.

The solvent and/or the plasticizer may be as herein above defined.

The total amount of solvent and plasticizer may be in the range of 5 wt% to 45 wt%, preferably of 10 wt% to 40 wt%, more preferably of 15 wt% to 35 wt%, and even more preferably of 20 wt% to 30 wt%, with respect to the total weight of the composition.

The composition may comprise at least one polyisocyanate oligomer, at least one additional polyurethane prepolymer, or mixtures thereof.

The polyisocyanate oligomer may have a free polyisocyanate monomer content of less than 0.2 wt%, preferably of less than 0.1 wt%.

The polyisocyanate oligomer may be a diisocyanate oligomer, notably obtained from a diisocyanate monomer selected from toluene diisocyanate (TDI), methylene diphenyl diisocyanate (MDI), 1,5-naphthalene diisocyanate (NDI), hexamethylene diisocyanate (HDI), isophorone diisocyanate (IPDI), 1,4-diisocyanate-2,2,6-trimethyl cyclohexane (TMCDI), 4,4-bis(isocyanatecyclohexyl)methane, isocyanurates, carbodiimides, uretonimides, biurets, allophanates, and mixtures thereof.

The polyisocyanate oligomer may be a polyisocyanate dimer or trimer, notably a diisocyanate dimer or trimer.

In one preferred embodiment, the polyisocyanate oligomer is selected from hexamethylene diisocyanate trimer, notably having a free polyisocyanate monomer content of less than 0.2 wt%, preferably of less than 0.1 wt%.

The additional polyurethane prepolymer is preferably different from the polyurethane prepolymer as obtained according to the method of the invention.

The additional polyurethane prepolymer is preferably commercially available.

The additional polyurethane prepolymer may have a free polyisocyanate monomer content of less than 0.2 wt%, preferably of less than 0.1 wt%.

The additional polyurethane prepolymer may be selected from aromatic diisocyanate based polyurethane prepolymers, such as TDI-based Imuthane® from COIM, MDI-based stripped prepolymer Adiprene® from Lanxess, Polurgreen® from Sapici; (cyclo)aliphatic diisocyanate based polyurethane prepolymers, such as IPDI-based or HDI-based polyurethane prepolymers, notably commercially available in the range of Desmodur® Ultra from Covestro.

When the composition comprises the polyisocyanate oligomer and/or the additional polyurethane prepolymer, the amount of the polyurethane prepolymer as obtained according to the method of the invention in the composition may be such that the amount of free polyisocyanate monomers in the composition is equal or below 0.1 wt%.

Accordingly, the addition of the polyisocyanate oligomer and/or the additional polyurethane prepolymer enables to further decrease the amount of free polyisocyanate monomers in the composition by a dilution effect.

When the composition comprises an amount of free polyisocyanate monomers equal or below 0.1 wt%, the user doesn't need to wear personal protective equipment, such as gloves, to manipulate the composition, according to the current European legislation.

When the composition comprises the polyisocyanate oligomer and/or the additional polyurethane prepolymer, the amount of [(polyurethane prepolymer as obtained according to the method of the invention) + (polyisocyanate oligomer) + (additional polyurethane prepolymer)] may be in the range of 25 wt% to 70 wt%, more preferably ranging from 30 wt% to 65 wt%, with respect to the total weight of the composition.

When the composition comprises the polyisocyanate oligomer and/or the additional polyurethane prepolymer, the weight ratio of (polyurethane prepolymer as obtained according to the method of the invention) to (sum of polyisocyanate oligomer and additional polyurethane prepolymer) may be in the range of 0.15 to 0.35, preferably of 0.20 to 0.30.

The composition may comprise at least one filler.

The filler may be selected from natural, ground or precipitated chalks made of calcium carbonate; barium sulphate; calcined kaolins; metal oxides such as aluminum oxides; metal hydroxides such as aluminum hydroxides; metal silicates, silicas, more particularly finely divided silicas from pyrolysis processes (fumed or pyrogenic silica); carbon blacks; polyvinyl chloride or polyethylene powders; organophilic phyllosilicates (organoclays); bentonites; and mixtures thereof.

Preferred fillers are selected from calcium carbonate, barium sulphate, aluminium hydroxide, silica, in particular pyrogenic silica, organophilic phyllosilicates (organoclays), bentonites, and mixtures thereof.

The total amount of filler(s) in the composition may range from 0 wt% to 40 wt% (notably 0.1 to 40 wt%), more preferably from 10 wt% to 30 wt%, with respect to the total weight of the composition.

The composition may comprise at least one catalyst, preferably selected from tertiary amines.

Examples of suitable tertiary amines include 2,2'-dimorpholinodiethylether (DMDEE); morpholine based amines, such as N-ethylmorpholine; N-t-butylmorpholine, N-methylmorpholine, N-butylmorpholine, hydroxyethylmorpholine, 4-(2-methoxyethyl-)morpholine; non-morpholine based amines, such as Bis-(2-dimethylaminoethyl)ether; triethylenediamine, N-(3-dimethylaminopropyl)-N,N-diisopropanolamine, N,N-bis(3-dimethylaminopropyl-N-isopropanolamine, 2-((2-(2-(dimethylamino)ethoxy)ethyl) methylamino)ethanol, 2,11-dimethyl-2,11-diaza-5,8-dioxa-dodecan, benzyldimethylamine, dimethylpiperzine, pentamethyldiethylenetriamine, pentamethyldipropylenetriamine , N,N,N'-trimethyl-N'-hydroxyethylethanediamine-1,2, 1,3,5-tris-(3-dimethylaminopropyl-)hexahydro-s-triazine, dimethylethanolamine, tetramethyldipropylenetriamine, N,N-dimethyl-2(2-aminoethoxy)ethanol; and combinations thereof.

In one preferred embodiment, the catalyst is selected from 2,2'-dimorpholinodiethylether (DMDEE).

The catalyst may be present in the composition in an amount ranging from 0.5 wt% to 3 wt%, preferably from 0.5 wt% to 2 wt%, more preferably from 0.5 wt% to 1.5 wt%, with respect to the total weight of the composition.

The composition may comprise at least one additive selected from a rheology modifier, a thickener, a flow control agent, a flow enhancer agent, an adhesion promoter, a heat stabilizer, a UV-absorber, a UV-stabilizer, an antioxidant, a pigment or dye, a levelling agent, a deaerating agent, a defoaming agent, a moisture scavenger, a fungicide, a biocidal agent; a fire-retardant agent, an oxygen barrier, a wetting agent, a drying agent, synthetic fibers, and mixtures thereof.

The total amount of additive(s) in the composition may range from 0.5 wt% to 20 wt%, more preferably from 0.5 wt% to 15 wt%, with respect to the total weight of the composition.

The synthetic fibers may be selected from thermoplastic fibers, such as polyethylene fibers.

The drying agent may be selected from reactive isocyanates such as p-tosyl isocyanate, calcium oxide, molecular sieves, and mixtures thereof.

The rheology modifier and/or the thickener may be selected from polyamides, such as a solution of polyhydroxycarboxylic acid amides, polyureas, and mixtures thereof.

The biocidal agent may be selected from fungicidal, bactericidal, insecticidal, algicidal agents and mixtures thereof.

The viscosity of the composition may be lower than 60 Poise (notably from 1 to 60 Poise), preferably from 10 to 60 Poise, more preferably from 15 to 60 Poise.

The viscosity of the composition is measured at a temperature of 23°C with a Brookfield viscosimeter using a Spindle N°3 and a rotation speed at 20 rpm, 7 days after its preparation.

The composition of the invention may be used to obtain a coating, adhesive, sealant or elastomer, in particular for waterproofing applications.

<u>Coating, adhesive, sealant or elastomer</u>

Another object of the present invention is a coating, adhesive, sealant or elastomer, in particular for waterproofing applications, obtained by curing the composition according to the invention.

The composition may be cured by heat curing, oxidative curing (i.e. siccativation) and/or moisture curing, preferably by moisture curing.

The curing may be carried out under ambient conditions. In particular, the curing may be carried out at ambient relative humidity and at ambient temperature, for example at a temperature in the range of -10°C to +50°C, preferably -5°C to +45°C, more preferably +5°C to +35°C.

The curing may be carried out during a time of 1 to 24h, preferably of 1 to 12h, and more preferably of 1 to 6h. For example, the curing is carried out during 2h, 3h, 4h or 5h.

The curing may be carried out directly on the jobsite, after application, notably with a roller or brush, of the composition on a substrate to be coated.

The substrate to be coated may be selected from concrete; metal substrates such as iron, aluminium, lead or copper substrates; metal alloy substrates such as steel, inox steel, aluminium alloy, lead alloy or copper alloy substrates; membranes, in particular roof membranes, such as bitumen or modified bitumen-based membranes, polyvinyl chloride (PVC) based membranes, ethylene propylene diene terpolymer (EPDM) based membranes or thermoplastic olefin (TPO) based membranes; and wood substrates.

The composition can be applied on flat surfaces, such as horizontal, oblique or vertical surfaces, or curved surfaces.

The composition can be applied on rough or smooth surfaces.

The amount of composition to be applied on the substrate to be coated, given in $g/m^2$ or $kg/m^2$, may depend on the final use and is generally indicated on the technical datasheet or prescription book of the composition.

The coating, adhesive, sealant or elastomer may be a primer, a basecoat or a topcoat.

In case of a primer or topcoat, the composition is typically applied on the substrate to be coated with an amount of 500 $g/m^2$ +/- 20%.

The coating, adhesive, sealant or elastomer may exhibit excellent mechanical properties.

The coating, adhesive, sealant or elastomer may exhibit a tensile strength at break in the range of 2 to 100 MPa, preferably 3 to 60 MPa.

The coating, adhesive, sealant or elastomer may exhibit a Young's modulus in the range of 10 to 600 MPa, preferably 20 to 550 MPa.

The coating, adhesive, sealant or elastomer may exhibit an elongation at break in the range of 1 to 1000%, preferably 5 to 800%, more preferably 5 to 600%.

The tensile strength at break, the Young's modulus and the elongation at break can be measured according to NF EN ISO 527 standard on a dry sample of coating, adhesive, sealant or elastomer, 7 days after its preparation. An extensometer from Instron can be used with a tensile speed of 100 mm/min, a temperature of 29°C and a dumbbell-shaped type 5 test specimen.

Use of the composition

Another object of the present invention is the use of the composition according to the invention for waterproofing applications.
The composition can be used for exterior applications, such as on roofs, balconies, terrasses, etc.
The composition can also be used for interior applications, such as bathrooms, kitchens, etc.

Use of a multifunctional coupling agent

Another object of the present invention is the use of a multifunctional coupling agent to reduce the residual free polyisocyanate monomers content of a polyurethane prepolymer, in particular below 2.8 wt%.
The multifunctional coupling agent is preferably as herein above defined.

EXAMPLES

The present invention is illustrated by the following non-limiting examples according to the present invention in view of comparative examples outside the invention.
The following materials were used in the following examples:

- polyisocyanate monomers:

  3-isocyanatomethyl-3,5,5-trimethylcyclohexylisocyanate (which is also called isophorone diisocyanate or IPDI): Desmodur® I from Covestro;
  4,4'-Methylenebis(phenyl isocyanate) (4,4'-MDI): Suprasec® 2385 from Huntsman (uretonimine-modified diphenyl methane diisocyanate; NCO %: 30.9; viscosity at 25°C: 25 mPa.s; average functionality: 2.0);

- polyols:

  poly-(ε-caprolactone) triol: CAPA® 3050 from Ingevity (MW: 540; OH value: 294-328 mg KOH/g; OH %: 9.4; viscosity at 23°C: 1190cp);
  castor oil from Alberdingk Boley (the prevalent triglyceride in castor oil is ricinolein, i.e. a triglyceride of ricinoleic acid, which is used herein as polyols); mixture comprising tripropylene glycol (TPG) and polytetrahydrofuran (PTHF);

- organo-metallic catalyst:

  dibutyltin dilaurate (Sn(IV) with two C4 alkyl groups and two C11 alkyl groups): REAXIS® C218 from Reaxis Inc.;
  dioctyltin dilaurate (Sn(IV) with two C8 alkyl groups and two C11 alkyl groups): REAXIS® C216 from Reaxis Inc.;
  stannous octoate (Sn(II)): REAXIS® C129 from Reaxis Inc.;
  organo-bismuth catalyst (Bi(III)): REAXIS® C739E50 from Reaxis Inc.;
  bismuth carboxylate (Bi(III)): REAXIS® C716 from Reaxis Inc.;
  zinc octoate (Zn(II)): REAXIS® C620 from Reaxis Inc.;
  bis-dodecylthio-dioctylstannane (Sn(IV) with two C8 alkyl groups and two C12 alkyl groups): Niax™ LC5632 from Momentive;
  dimethylbis-1-oxoneodecyl-oxy-stannane (Sn(IV) with two methyl groups and two C10 chains): Niax™ LC5628 from Momentive;
  bis-dedecylthio-dimethylstannane (Sn(IV) with two methyl groups and two C12 chains): Niax™ LC5622 from Momentive;

- additional catalyst or catalyst:
  2,2'-dimorpholinodiethyl ether (DMDEE);
- multifunctional coupling agent:

  3-Oxazolidineethanol, 2-(1-methylethyl)-: Incozol 3 (13) from Incorez (MW: 159; viscosity at 23°C: 45cp);
  3-mercaptopropyl-trimethoxysilane: Silquest™ A189 from Momentive;
  3-phenylamino propyltrimethoxysilane: Silquest™ Y9669 from Momentive;

- solvent:

1-methoxy-2-propylacetate (PMA);
xylene;

- UV stabilizer:
  decanedioic acid, bis (2,2,6,6-tetramethyl-1-(octyloxy)-4-piperidinyl) ester: Tinuvin® 123 from BASF;
- pigment paste:
  Holco XP10 from Holland Colours;
- polyisocyanate oligomer having a free polyisocyanate monomer content of less than 0.2 wt%:
  hexamethylene diisocyanate trimer (HDI homopolymer): Tolonate™ HDT from Vencorex Chemicals;
- thickener:
  solution of polyhydroxycarboxylic acid amides: RHEOBYK-R 605 from BYK;
- defoamer:
  modified polysiloxane flow and air release agent: Borchi® Gol 0011 from Borchers.

*Polyurethane prepolymer (PP)*

Step (a):

In the following examples, polyols were added under nitrogen gas to polyisocyanate monomers. Then, a solvent was added under nitrogen gas to the mixture comprising polyols and polyisocyanate monomers. Then, an organometallic catalyst (if any) was added under nitrogen gas to the mixture comprising polyols, polyisocyanate monomers and solvent. The obtained reaction medium was heated under stirring at 80°C under nitrogen gas until the first theoretical %NCO was reached.

Step (b):

Subsequently, when the first theoretical %NCO was reached (i.e. when the reaction between polyols and polyisocyanate monomers was finished), a multifunctional coupling agent (if any) was added in the reaction medium. The obtained reaction medium was held under stirring at 80°C under nitrogen gas until the second theoretical %NCO was reached.

When the first theoretical %NCO was reached or when the second theoretical %NCO was reached in case a multifunctional coupling agent is added, the reaction medium was cooled down and stored in an air-tight container purged by nitrogen to prevent moisture pick-up from the atmosphere.

In order to determine when the first theoretical %NCO of step (a) and when the second theoretical %NCO of step (b) were reached, the progress of the reaction in steps (a) and (b) was followed by measuring the %NCO. This measurement was carried out by conventional titration process according to the ASTM 2572 standard.

In the following examples, the residual free polyisocyanate monomers content was determined by SEC according to the method described above, 7 days after the preparation of the polyurethane prepolymer.

In the following examples, the viscosity was measured at a temperature of 23°C with a Brookfield viscosimeter using a Spindle N°3 and a rotation speed at 20 rpm, 7 days after the preparation of the polyurethane prepolymer composition.

In the following examples, the solids extract was approximately in the range of 68 wt% to 80 wt% (which means that the solvent was therefore present in an amount of approximately 20 wt% to 32 wt%).

Examples PP* 1-9, 15-17, 19 and 23 are comparative examples outside the invention and Examples PP 10-14, 18, 20-22 and 24 are according to the present invention.

| EXAMPLES | PP*1 | PP*2 | PP*3 | PP*4 | PP*5 |
|---|---|---|---|---|---|
| Polyisocyanate monomers. (g) | Desmodur I (41.2) | Desmodur I (41.24) | Desmodur I (41.24) | Desmodur I (41.24) | Desmodur I (41.24) |
| Polyols (g) | CAPA 3050 (33.68) | CAPA 3050 (33.61 ) | CAPA 3050 (33.61 ) | CAPA 3050 (33.61 ) | CAPA 3050 (33.61 ) |
| Organo-metallic catalyst (ppm) | C218 (100) | C216 (330) | LC5628 (300) | LC5622 (230) | LC5632 (317) |
| Additional catalyst (ppm) | - | - | - | - | - |
| Multifunctional coupling agent (g) | - | - | - | - | - |

(continued)

| EXAMPLES | PP*1 | PP*2 | PP*3 | PP*4 | PP*5 |
|---|---|---|---|---|---|
| Solvent (g) | PMA (25.12) | PMA (25.12) | PMA (25.12) | PMA (25.12) | PMA (25.12) |
| Molar ratio n(polyisocyanate monomers) / n(polyols + multifunctional coupling agent) | 2.0 : 1 | 2.0 : 1 | 2.0: 1 | 2.0 : 1 | 2.0 : 1 |
| PROPERTIES | | | | | |
| Residual free polyisocyanate monomers (%) | 4.0 | 5.1 | 6.8 | 6.7 | 5.4 |
| Viscosity (Poise) | 62 | 68 | 62 | 56 | 42 |
| %NCO | 7.71 | 7.79 | 7.79 | 7.79 | 7.79 |
| Reaction time (min) | 30 | 30 | 20 | 30 | 30 |

| EXAMPLES | PP*6 | PP*7 | PP*8 | PP*9 | PP10 |
|---|---|---|---|---|---|
| Polyisocyanate monomers (g) | Desmodur I (41.2) | Desmodur I (41.24) | Desmodur I (41.24) | Desmodur I (41.22) | Desmodur I (39.54) |
| Polyols (g) | CAPA 3050 (33.68) | CAPA 3050 (33.61 ) | CAPA 3050 (33.61 ) | CAPA 3050 (33.63) | CAPA 3050 (32.23) |
| Organo-metallic catalyst (ppm) | C716 (150) | C739E50 (250) | C620 (230) | C129 (300) | C218 (100) |
| Additional catalyst (ppm) | - | - | - | - | - |
| Multifunctional coupling agent (g) | - | - | - | - | I3 (3.1) |
| Solvent (g) | PMA (25.12) | PMA 25.12 | PMA (25.12) | PMA (25.12) | PMA 25.12) |
| Molar ratio n(polyisocyanate monomers) / n(polyols + multifunctional coupling agent) | 2.0 : 1 | 2.0 : 1 | 2.0 : 1 | 2.0 : 1 | 1.80 : 1 |
| PROPERTIES | | | | | |
| Residual free polyisocyanate monomers (%) | 8.7 | 8.4 | 7.0 | 6.9 | 1.4 |
| Viscosity (Poise) | 72 | 260 | 62 | 51.2 | 18 |
| %NCO | 7.71 | 7.79 | 7.79 | 7.72 | 6.65 |
| Reaction time (min) | 90 | 60 | 85 | 45 | 40 |
| | | | | | |
| EXAMPLES | PP11 | PP12 | PP13 | PP14 | PP*15 |
| Polyisocyanate monomers (g) | Desmodur I (39.54) | Desmodur I (37.82) | Desmodur I (37.08) | Desmodur I (35.92) | Desmodur I (41.24) |
| Polyols (g) | CAPA 3050 (32.23) | CAPA 3050 (30.83) | CAPA 3050 (30.22) | CAPA 3050 (29.28) | CAPA 3050 (33.61 ) |
| Organo-metallic catalyst (ppm) | LC5632 (300) | C216 (330) | C216 (330) | C216 (330) | C216 (330) |
| Additional catalyst (ppm) | - | - | - | - | DMDEE (900) |
| Multifunctional coupling agent (g) | I3 (3.1) | I3 (6.2) | A189 (7.7) | Y9669 (10.1) | - |

(continued)

| EXAMPLES | PP*6 | PP*7 | PP*8 | PP*9 | PP10 |
|---|---|---|---|---|---|
| Solvent (g) | PMA (25.12) | PMA (25.12) | PMA (25.12) | PMA (25.12) | PMA (25.12) |
| Molar ratio n(polyisocyanate monomers) / n(polyols + multifunctional coupling agent) | 1.80 : 1 | 1.62: 1 | 1.62: 1 | 1.62: 1 | 2.0 : 1 |
| **PROPERTIES** | | | | | |
| Residual free poly isocyanate monomers (%) | 2.3 | 0.7 | 1.7 | 1.6 | 4.4 |
| Viscosity (Poise) | 105 | 168 | 16 | 80 | 49 |
| %NCO | 6.65 | 5.51 | 5.39 | 5.12 | 7.16 |
| Reaction time (min) | 30 | 30 | 150 | 30 | 20 |

| EXAMPLES | PP*16 | PP*17 | PP18 | PP*19 | PP20 |
|---|---|---|---|---|---|
| Poly isocyanate monomers (g) | Desmodur I (41.24) | Desmodur I (41.24) | Desmodur I (37.80) | Desmodur I (29.49) | Desmodur I (28.03) |
| Polyols (g) | CAPA 3050 (33.61 ) | CAPA 3050 (33.61 ) | CAPA 3050 (30.84) | Castor oil (45.67) | Castor oil (49.73) |
| Organo-metallic catalyst (ppm) | LC5632 (300) | C620 (230) | C216 (300) | - | C216 (100) |
| Additional catalyst (ppm) | DMDEE (900) | DMDEE (900) | DMDEE (900) | - | - |
| Multifunctional coupling agent (g) | - | - | I3 (6.2) | I3 (4.83) | I3 (2.23) |
| Solvent (g) | PMA (25.12) | PMA (25.12) | PMA (25.12) | Xylene (20.00) | Xylene (20.00) |
| Molar ratio n(polyisocyanate monomers) / n(polyols + multifunctional coupling agent) | 2.0 : 1 | 2.0 : 1 | 1.62 : 1 | 1.65 : 1 | 1.62 : 1 |
| **PROPERTIES** | | | | | |
| Residual free polyisocyanate monomers (%) | 4.9 | 6.3 | 1.1 | 2.9 | 2.2 |
| Viscosity (Poise) | 44 | 83 | 86 | - | 22.4 |
| %NCO | 7.89 | 7.66 | 4.98 | 4.54 | 4.37 |
| Reaction time (min) | 20 | 30 | 90 | 120 | 100 |

| EXAMPLES | PP21 | PP22 | PP*23 | PP24 |
|---|---|---|---|---|
| Poly isocyanate monomers (g) | Desmodur I (28.03) | Desmodur I (28.03) | Suprasec 2385 (18.40) | Suprasec 2385 (18.40) |
| Polyols (g) | Castor oil (49.73) | Castor oil (49.73) | PTHF + TPG (49.82) | PTHF + TPG (49.82) |
| Organo-metallic catalyst (ppm) | LC5632 (100) | C218 (100) | - | - |
| Additional catalyst (ppm) | - | - | - | - |

(continued)

| EXAMPLES | PP21 | PP22 | PP*23 | PP24 |
|---|---|---|---|---|
| Multifunctional coupling agent (g) | I3 (2.23) | I3 (2.23) | - | I3 (1.35) |
| Solvent (g) | Xylene (20.00) | Xylene (20.00) | Xylene (31.80) | Xylene (31.80) |
| Molar ratio n(polyisocyanate monomers) / n (polyols + multifunctional coupling agent) | 1.62: 1 | 1.62 : 1 | 1.81 : 1 | 1.62: 1 |
| **PROPERTIES** | | | | |
| Residual free polyisocyanate monomers (%) | 1.8 | 2.2 | 2.95 | 1.41 |
| Viscosity (Poise) | 50.2 | 25.8 | 58.9 | 211.0 |
| %NCO | 4.40 | 4.18 | 2.45 | 1.95 |
| Reaction time (min) | 100 | 100 | 180 | 180 |

Examples PP 10-14 according to the present invention have to be compared with Comparative Examples PP* 1-9; Example PP 18 according to the present invention has to be compared with Comparative Examples PP* 15-17; Examples PP 20-22 according to the present invention have to be compared with Comparative Example PP* 19; and Example PP 24 according to the present invention has to be compared with Comparative Example PP* 23.

The %NCO indicated in the above table corresponds to the first theoretical %NCO for Comparative Examples PP* 1-9, 15-17 and 23; and corresponds to the second theoretical %NCO for Examples 10-14, 18, 20-22, 24 and Comparative Example PP* 19.

The reaction time indicated in the above table corresponds to the time needed to reach the first theoretical %NCO in step (a) in Comparative Examples PP* 1-9, 15-17 and 23; and corresponds to the total time needed to reach the. first theoretical %NCO in step (a) and then the second theoretical %NCO in step (b) in Examples 10-14, 18, 20-22, 24 and Comparative Example PP* 19.

The above-mentioned examples show that the Examples PP 10-14, 18, 20-22 and 24 according to the present invention have a reduced residual free polyisocyanate monomers content, i.e. below or equal to 2.8 wt%, and that the Comparative Examples PP* 1-9, 15-17, 19 and 23 outside the invention have a residual free polyisocyanate monomers content higher than 2.8 wt%.

*Composition (C1) according to the present invention comprising a polyurethane prepolymer according to the present invention and a solvent and/or plasticizer*

In the composition C1, the used polyurethane prepolymer according to the present invention was the Example PP12. Alternatively, PP12 could be replaced by the Example PP10, PP11, PP13, PP14, PP18, PP20, PP21, PP22 or PP24 according to the present invention.

| Composition C1 | wt % |
|---|---|
| PP12 (Polyurethane prepolymer) | 65 |
| PMA (Solvent) | 25 |
| DMDEE (Catalyst) | 1 |
| Tinuvin® 123 (UV stabiliser) | 1 |
| Holco XP10 (Pigment paste) | 5 |
| RHEOBYK-R 605 (Thickener) | 2 |
| Borchi® Gol 0011 (Defoamer) | 1 |
| **TOTAL** | **100** |

| Composition C1 | |
|---|---|
| Amount of free polyisocyanate monomers (%) | 0.5 |
| Viscosity (Poise) | 47 |

The amount of free polyisocyanate monomers in the composition C1 was determined by SEC according to the method disclosed above, 7 days after its preparation.

The viscosity of composition C1 was measured at a temperature of 23°C with a Brookfield viscosimeter using a Spindle N°3 and a rotation speed at 20 rpm, 7 days after its preparation.

*Composition (C2) according to the present invention comprising a polyurethane prepolymer according to the invention, a solvent and/or plasticizer, and a polyisocyanate oligomer and/or additional polyurethane prepolymer*

In the composition C2, the used polyurethane prepolymer according to the present invention was the Example PP12. Alternatively, PP12 could be replaced by the Example PP10, PP11, PP13, PP14, PP18, PP20, PP21, PP22 or PP24 according to the present invention.

| Composition C2 | wt % |
|---|---|
| PP12 (Polyurethane prepolymer) | 14 |
| Tolonate™ HDT (Polyisocyanate oligomer, in particular having a free polyisocyanate monomer content of less than 0.2 wt%) | 51 |
| PMA (Solvent) | 25 |
| DMDEE (Catalyst) | 1 |
| Tinuvin® 123 (UV stabiliser) | 1 |
| Holco XP10 (Pigment paste) | 5 |
| RHEOBYK-R 605 (Thickener) | 2 |
| Borchi® Gol 0011 (Defoamer) | 1 |
| **TOTAL** | **100** |

| Composition C2 | |
|---|---|
| Amount of free polyisocyanate monomers (%) | 0.1 |
| Viscosity (Poise) | 24 |

The amount of free polyisocyanate monomers in the composition C2 and the viscosity of composition C2 were measured according to the methods described for composition C1.

*Coating, adhesive, sealant or elastomer according to the invention, obtained bv curing the composition C1*

The composition C1 was moisture-cured at ambient relative humidity and at ambient temperature for 120 min, which corresponds to the time necessary to obtain a dry sample.

| Coating, adhesive, sealant or elastomer obtained by curing the composition C1 | |
|---|---|
| Tensile strength at break (MPa) | 17 |
| Young's modulus (MPa) | 176 |
| Elongation at break (%) | 100 |

The tensile strength at break, the Young's modulus and the elongation at break were measured according to

NF EN ISO 527 standard on a dry sample of coating, adhesive, sealant or elastomer, 7 days after its preparation. An extensometer from Instron was used with a tensile speed of 100 mm/min, a temperature of 29°C and a dumbbell-shaped type 5 test specimen.

*Coating, adhesive, sealant or elastomer according to the invention, obtained by curing the composition C2*

The composition C2 was moisture-cured at ambient relative humidity and at ambient temperature for 240 min, which corresponds to the time necessary to obtain a dry sample.

| **Coating, adhesive, sealant or elastomer obtained by curing the composition C2** | |
|---|---|
| Tensile strength at break (MPa) | 45 |
| Young's modulus (MPa) | 465 |
| Elongation at break (%) | 12 |

The tensile strength at break, the Young's modulus and the elongation at break were measured according to the methods described for the coating, adhesive, sealant or elastomer obtained by curing the composition C1.

The above-mentioned compositions C1 and C2 according to the present invention are particularly suitable for waterproofing applications.

Another object of the present invention is a method for preparing a polyurethane prepolymer comprising the step of:

(a) reacting (cyclo)aliphatic polyisocyanate monomers, and in particular (cyclo)aliphatic diisocyanate monomers, with polyols, in the presence of at least one organotin catalyst.

It is known to use catalysts to overcome the lower electrophilic character and therefore lower reactivity of (cyclo)aliphatic polyisocyanate monomers with polyols, compared to aromatic polyisocyanate monomers. Thus, these known catalysts act as a kinetic catalyst to accelerate the reaction between (cyclo)aliphatic polyisocyanate monomers and polyols.

In the context of the present invention, the inventors have shown that, independently from the addition of a multifunctional coupling agent, the use of an organotin catalyst has a surprising effect by itself as it not only acts as a kinetic catalyst to accelerate the reaction between (cyclo)aliphatic polyisocyanate monomers and polyols, but also as a selectivity enhancer to improve the selectivity (i.e. the difference of reactivity) between the isocyanate groups of the (cyclo)aliphatic polyisocyanate monomer.

Accordingly, for the same quantities of (cyclo)aliphatic polyisocyanate monomers and polyols, the addition of the organotin catalyst enables to improve the selectivity between the isocyanate groups of each (cyclo)aliphatic polyisocyanate monomer, and therefore to reduce the residual free polyisocyanate monomers content in the prepared polyurethane prepolymer.

The selectivity between the isocyanate groups of the (cyclo)aliphatic polyisocyanate monomer results from the dissymmetry of the monomer and/or from a substitution effect. For example, when the selectivity results from a substitution effect, the diisocyanate monomers can be symmetrical molecules having two NCO groups of equal reactivity. When one of these NCO groups reacts, a substitution effect is produced which usually decreases the reactivity of the second NCO group.

In case of a (cyclo)aliphatic diisocyanate monomer having two NCO functions, the selectivity is the ratio of the reaction rates between the first NCO group and the second NCO group which react with a polyol.

In case of a (cyclo)aliphatic diisocyanate monomer having two NCO functions, the organotin catalyst of the invention may enable to increase the difference in reactivity of the two NCO functions, i.e. to improve their selectivity.

Indeed, compared to organo-metallic catalysts based on other metallic elements such as organo-bismuth or organo-zinc catalysts for example, the organotin catalyst not only acts as a kinetic catalyst to accelerate the reaction between (cyclo)aliphatic polyisocyanate monomers and polyols, but also as a selectivity enhancer to improve the selectivity (i.e. the difference of reactivity) between the isocyanate groups of the (cyclo)aliphatic polyisocyanate monomer.

The organotin catalyst is preferably a tetravalent organotin catalyst.

It is particularly advantageous to use a tetravalent organotin catalyst because compared to organotin catalyst having a different metal valence such as divalent organotin catalyst for example, the tetravalent organotin catalyst enables to further improve the selectivity between the isocyanate groups of the (cyclo)aliphatic polyisocyanate monomer.

The organotin catalyst may comprise at least one alkyl group, and preferably four alkyl groups, each alkyl group

comprising at least 4 carbon atoms, preferably comprising from 4 to 20 carbon atoms, more preferably comprising from 4 to 17 carbon atoms, such as n-butyl, n-octyl, n-undecyl, n-dodecyl, n-tridecyl, n-tetradecyl, n-pentadecyl, hexadecyl or n-heptadecyl group.

It is particularly advantageous to use such a tetravalent organotin catalyst because it enables to further improve the selectivity between the isocyanate groups of the (cyclo)aliphatic polyisocyanate monomer, compared to tetravalent organotin catalysts comprising one or more methyl groups for example.

The tetravalent organotin catalyst may be represented by the formula (I):

$$(R1)_2\text{-}Sn(IV)\text{-}(R3\text{-}R2)_2 \qquad (I)$$

wherein

R1 is an alkyl group comprising at least 4 carbon atoms, preferably comprising from 4 to 8 carbon atoms;
R2 is an alkyl group comprising at least 8 carbon atoms, preferably comprising from 8 to 20 carbon atoms, more preferably from 10 to 18 carbon atoms; and R3 is an -O-(C=O)- or -S- group.

More preferably, R1 is an n-butyl or n-octyl group and R2 is an n-undecyl, n-dodecyl, n-tridecyl, -n-tetradecyl, n-pentadecyl, hexadecyl or n-heptadecyl or group.

In one preferred embodiment, the tetravalent organotin catalyst is selected from dibutyltin dilaurate (DBTL), dioctyltin dilaurate (DOTL), bis-dodecylthio-dioctylstannane, and mixtures thereof.

The amount of the organotin catalyst may be below 1000ppm, preferably below 500 ppm, more preferably below 400ppm, with respect to the total weight of the reaction medium obtained in step (a).

In particular, the amount of the organotin catalyst is in the range of 50ppm to 1000ppm, preferably of 50ppm to 500ppm, more preferably of 50ppm to 400ppm, with respect to the total weight of the reaction medium obtained in step (a).

In one preferred embodiment, the amount of the organotin catalyst is about 300ppm with respect to the total weight of the reaction medium obtained in step (a).

Optionally, at least one additional catalyst can be added with the organotin catalyst in step (a). The additional catalyst is preferably different from the organotin catalyst.

Thus, the method may comprise a step (a) of reacting (cyclo)aliphatic polyisocyanate monomers, and in particular (cyclo)aliphatic diisocyanate monomers, with polyols, in the presence of a mixture comprising at least one organotin catalyst and at least one additional catalyst.

The use of the additional catalyst may enable to further improve the selectivity between the isocyanate groups of the (cyclo)aliphatic polyisocyanate monomer. Indeed, the mixture comprising at least one organotin catalyst and at least additional catalyst may have a synergistic effect.

The additional catalyst is preferably selected from tertiary amines.

Examples of suitable tertiary amines include 2,2'-dimorpholinodiethylether (DMDEE); morpholine based amines, such as N-ethylmorpholine; N-t-butylmorpholine, N-methylmorpholine, N-butylmorpholine, hydroxyethylmorpholine, 4-(2-methoxyethyl-)morpholine; non-morpholine based amines, such as Bis-(2-dimethylaminoethyl)ether; triethylenediamine, N-(3-dimethylaminopropyl)-N,N-diisopropanolamine, N,N-bis(3-dimethylaminopropyl-N-isopropanolamine, 2-((2-(2-(dimethylamino)ethoxy)ethyl) methylamino)ethanol, 2,11-dimethyl-2,11-diaza-5,8-dioxa-dodecan, benzyldimethylamine, dimethylpiperzine, pentamethyldiethylenetriamine, pentamethyldipropylenetriamine , N,N,N'-trimethyl-N'-hydroxyethylethanediamine-1,2, 1,3,5-tris-(3-dimethylaminopropyl-)hexahydro-s-triazine, dimethylethanolamine, tetramethyldipropylenetriamine, N,N-dimethyl-2(2-aminoethoxy)ethanol; and combinations thereof.

In one preferred embodiment, the additional catalyst is selected from 2,2'-dimorpholinodiethylether (DMDEE).

The amount of the additional catalyst may be below 2000ppm, with respect to the total weight of the reaction medium obtained in step (a).

In particular, the amount of the additional catalyst is in the range of 50ppm to 2000ppm, preferably of 500ppm to 1500ppm, more preferably of 700ppm to 1100ppm, with respect to the total weight of the reaction medium obtained in step (a).

In one preferred embodiment, the amount of the additional catalyst is about 900ppm with respect to the total weight of the reaction medium obtained in step (a).

The (cyclo)aliphatic polyisocyanate monomers may be selected from (cyclo)aliphatic diisocyanate monomers.

The (cyclo)aliphatic diisocyanate monomers may be selected from 3-isocyanatomethyl-3,5,5-trimethylcyclohexylisocyanate (also called isophorone diisocyanate or IPDI), methyl 2,6-diisocyanatohexanoate, L-lysine methyl ester diisocyanate, ethyl 2,6-diisocyanatohexanoate, L-lysine ethyl ester diisocyanate, 1,6-diisocyanato-2,4,4-trimethylhexane, 1,6-diisocyanato-2,2,4-trimethylhexane, 2-methylpentamethylenediisocyanate, 2,4-diisocyanato-1-methylcyclohexane, 2,4-dicyclohexylmethane diisocyanate, 1,5-pentamethylene diisocyanate (PDI), hexamethylene diisocyanate

(HDI), 4,4'-methylenedicyclohexyl diisocyanate ($H_{12}MDI$), trans-1,4-cyclohexane diisocyanate (CHDI), and mixtures thereof.

The polyols may be as herein above defined.

Another object of the present invention is a polyurethane prepolymer as obtained according to the method as described above.

Another object of the present invention is a composition comprising a polyurethane prepolymer as described above or as obtained according to the method as described above.

Another object of the present invention is a coating, adhesive, sealant or elastomer obtained by curing the composition as described above.

Another object of the present invention is the use of the composition as described above for waterproofing applications, such as on roofs, balconies, terraces, bathrooms and kitchens.

## Claims

1. A method for preparing a polyurethane prepolymer, comprising the steps of:

   (a) reacting polyisocyanate monomers with polyols, wherein when the polyisocyanate monomers comprise (cyclo)aliphatic polyisocyanate monomers, step (a) is performed in the presence of at least one organotin catalyst, and
   (b) adding in the reaction medium obtained in step (a) at least one multifunctional coupling agent.

2. The method according to claim 1, wherein the organotin catalyst is a tetravalent organotin catalyst.

3. The method according to claim 1 or 2, wherein the organotin catalyst comprises at least one alkyl group, and preferably four alkyl groups, each alkyl group comprising at least 4 carbon atoms, preferably comprising from 4 to 20 carbon atoms, more preferably comprising from 4 to 17 carbon atoms, such as n-butyl, n-octyl, n-undecyl, n-dodecyl, n-tridecyl, n-tetradecyl, n-pentadecyl, hexadecyl or n-heptadecyl group.

4. The method according to any one of claims 1 to 3, wherein the amount of the organotin catalyst is in the range of 50ppm to 1000ppm with respect to the total weight of the reaction medium obtained in step (b).

5. The method according to any one of claims 1 to 4, wherein the polyisocyanate monomers are diisocyanate monomers.

6. The method according to claim 5, wherein the diisocyanate monomers are selected from 3-isocyanatomethyl-3,5,5-trimethylcyclohexylisocyanate (IPDI); methyl 2,6-diisocyanatohexanoate; L-lysine methyl ester diisocyanate; ethyl 2,6-diisocyanatohexanoate; L-lysine ethyl ester diisocyanate; 1,6-diisocyanato-2,4,4-trimethylhexane; 1,6-diisocyanato-2,2,4-trimethylhexane; 2-methylpentamethylenediisocyanate; 2,4-diisocyanato-1-methylcyclohexane; 2,4-dicyclohexylmethane diisocyanate; 1,5-pentamethylene diisocyanate (PDI); hexamethylene diisocyanate (HDI); 4,4'-methylenedicyclohexyl diisocyanate ($H_{12}MDI$); trans-1,4-cyclohexane diisocyanate (CHDI); 1,3- tetramethylxylylene diisocyanate (1,3-TMXDI), 1,4-tetramethylxylylene diisocyanate (1,4-TMXDI) or mixtures thereof; methylene diphenyl diisocyanate (MDI), such as 4,4'-Methylenebis(phenyl isocyanate) (4,4'-MDI), 2,4'-Methylenebis(phenyl isocyanate) (2,4'-MDI), 2,2'-Methylenebis(phenyl isocyanate) (2,2'-MDI) or mixtures thereof; toluene diisocyanate (TDI), such as 2,4-diisocyanato-1-méthylbenzène (2,4-TDI), 2,6-diisocyanato-1-méthylbenzène (2,6-TDI) or mixtures thereof; phenylene diisocyanate (PPDI), such as 1,2-Phenylene diisocyanate (1,2-PPDI), 1,3-Phenylene diisocyanate (1,3-PPDI), 1,4-Phenylene diisocyanate (1,4-PPDI) or mixtures thereof; 1,5-naphthalene diisocyanate (NDI); xylene diisocyanate (XDI); and mixtures thereof.

7. The method according to any one of claims 1 to 6, wherein the multifunctional coupling agent comprises at least one reactive functional group capable of reacting with an isocyanate functional group of a residual free polyisocyanate monomer, preferably selected from functional groups containing labile hydrogen atom(s) or epoxy groups, and at least one additional reactive functional group sensitive to temperature, oxygen and/or moisture.

8. The method according to claim 7, wherein the additional reactive functional group is moisture-sensitive, the moisture-sensitive additional reactive functional group being preferably selected from oxazolidines and derivatives thereof, alkoxysilanes and mixtures thereof.

9. The method according to claim 7 or 8, wherein the multifunctional coupling agent is selected from:

- oxazolidines and derivatives thereof functionalized with an epoxy group or with a functional group containing labile hydrogen atom(s), such as a thiol, primary amino, secondary amino, ureido or hydroxyl group;
- alkoxysilanes functionalized with an epoxy group or with a functional group containing labile hydrogen atom(s), such as a thiol, primary amino, secondary amino, ureido or hydroxyl group; and
- mixtures thereof.

**10.** The method according to claim 9, wherein the oxazolidine and derivative thereof functionalized with an epoxy group or with a functional group containing labile hydrogen atom(s) is represented by the formula (II):

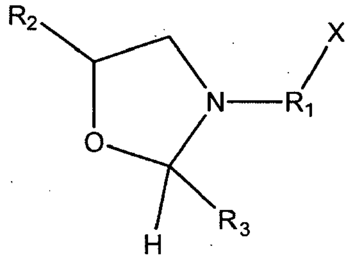

(II)

wherein

$R_1$ is a cyclic, linear or branched C1-C10 alkyl, eventually substituted with at least one heteroatom, $R_1$ is preferably a linear C1-C4 alkyl;
$R_2$ is a hydrogen atom or a cyclic, linear or branched C1-C10 alkyl, eventually substituted with at least one heteroatom, $R_2$ is preferably a hydrogen atom or a linear C1-C4 alkyl;
$R_3$ is a hydrogen atom or a cyclic, linear or branched C1-C10 alkyl, eventually substituted with at least one heteroatom, R3 is preferably a linear or branched C2-C8 alkyl; and
X is a thiol, a primary amino, a secondary amino, a ureido, a hydroxyl or an epoxy group, preferably X is a thiol, a secondary amino, a ureido or a hydroxyl group.

**11.** The method according to claim 9 or 10, wherein the alkoxysilane functionalized with an epoxy group or with a functional group containing labile hydrogen atom(s) is be represented by the formula (III):

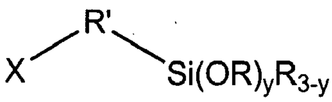

(III)

wherein

each R is independently a linear or branched C1-C20 alkyl, preferably a methyl or ethyl, more preferably a methyl;
R' is a linear or branched C1-C20 alkyl, preferably a methyl, ethyl or propyl, more preferably a methyl or propyl;
y is 1, 2 or 3, preferably y is 2 or 3, more preferably y is 3; and
X is a thiol, a primary amino, a secondary amino, a ureido, a hydroxyl or an epoxy group, preferably X is a thiol, a secondary amino, a ureido or a hydroxyl group.

**12.** The method according to any one of claims 7 to 11, wherein the multifunctional coupling agent is selected from 3-Oxazolidineethanol, 2-(1-methylethyl)-; N-(n-Butyl)-3-aminopropyltrimethoxysilane; 3-Mercaptopropyl-trimethoxysilane; 3-phenylamino propyltrimethoxysilane; and mixtures thereof.

**13.** The method according to any one of claims 1 to 12, wherein the amount of the multifunctional coupling agent is below or equal to 15 wt%, preferably in the range of 0.5 wt% to 12 wt%, more preferably in the range of 1 wt% to 11 wt%, with respect to the total weight of the reaction medium obtained in step (b).

**14.** The method according to any one of claims 1 to 13, wherein the polyols are selected from polyester polyols, such as poly-(ε-caprolactone) polyols, for example poly-(ε-caprolactone) diols or triols; polyether polyols, such as polyethylene glycol, polypropylene glycol, polypropylene triglycerides glycol trimethylolpropane triether, polypropylene glycol-co-polyethylene glycol, polytetrahydrofuran; polycarbonate polyols, such as KURARAY POLYOL™ C-2090; dihydroxy or trihydroxy triglycerides, such as triglycerides containing two or three hydroxy fatty acids such as ricinoleic acid or 12-hydroxy stearic acid, for example ricinolein; dimer of hydroxy fatty acids such as ricinoleic acid or 12-hydroxy stearic acid, for example dimer diol PripolTM from Croda Coatings & Polymers; hydrocarbon polyols; polybutadiene polyols, such as KRASOL® LBH-P 2000; polyolefin polyols; vegetable oils having hydroxyl groups or vegetable oils into which hydroxyl groups have been introduced by chemical modification, e.g. soybean oil or castor oil; and combinations thereof.

**15.** The method according to any one of claims 1 to 14, wherein the polyisocyanate monomers, the polyols and the multifunctional coupling agent are in such a quantity in the reaction medium obtained in step (b) that the molar ratio n(polyisocyanate monomers) / n(polyols + multifunctional coupling agent) is in the range of 1.5:1 to 3.0:1, preferably of 1.5:1 to 2.5:1, more preferably of 1.5:1 to 2.3:1, and even more preferably of 1.5:1 to 2.2:1.

**16.** The method according to any one of claims 1 to 15, wherein the polyurethane prepolymer has less than or equal to 2.8 wt% of residual free polyisocyanate monomers.

**17.** A polyurethane prepolymer as obtained according to the method of any one of claims 1 to 16, having less than or equal to 2.8 wt% of residual free polyisocyanate monomers.

**18.** A composition comprising a polyurethane prepolymer according to claim 17 or as obtained according to the method of any one of claims 1 to 16, and a solvent and/or a plasticizer,
wherein the amount of the polyurethane prepolymer in the composition is such that the amount of free polyisocyanate monomers in the composition is equal or below 0.5 wt%.

**19.** The composition according to claim 18, comprising at least one polyisocyanate oligomer, at least one additional polyurethane prepolymer, or mixtures thereof,
wherein the amount of the polyurethane prepolymer in the composition is such that the amount of free polyisocyanate monomers in the composition is equal or below 0.1 wt%.

**20.** The composition according to claim 18 or 19, comprising at least one additive selected from a rheology modifier, a thickener, a flow control agent, a flow enhancer agent, an adhesion promoter, a heat stabilizer, a UV-absorber, a UV-stabilizer, an antioxidant, a pigment or dye, a levelling agent, a deaerating agent, a defoaming agent, a moisture scavenger, a fungicide, a biocidal agent, a fire-retardant agent, an oxygen barrier, a wetting agent, a drying agent, synthetic fibers, and mixtures thereof.

**21.** Coating, adhesive, sealant or elastomer obtained by curing the composition as defined in any one of claims 18 to 20.

**22.** Use of the composition as defined in any one of claims 18 to 20 for waterproofing applications, such as on roofs, balconies, terraces, bathrooms and kitchens.

**23.** Use of a multifunctional coupling agent to reduce the residual free polyisocyanate monomers content of a polyurethane prepolymer, the multifunctional coupling agent being preferably defined according to any one of claims 7 to 12.

Europäisches Patentamt
European Patent Office
Office européen des brevets

# EUROPEAN SEARCH REPORT

Application Number
EP 22 31 5103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 141 025 A1 (TEXTRON INC [US]) 15 May 1985 (1985-05-15) * examples I-III * | 1-22 | INV. C08G18/10 C08G18/12 C08G18/24 C08G18/36 C08G18/42 C08G18/75 |
| X | EP 0 372 264 A1 (REICHHOLD CHEMICALS INC [US]) 13 June 1990 (1990-06-13) * examples I-A, II-A, III-A * | 1-22 | |
| X | EP 1 721 948 A2 (CHEMQUE INC [CA]) 15 November 2006 (2006-11-15) * example 4 * | 1-22 | |
| X | US 2008/058492 A1 (GRISWOLD ROY M [US]) 6 March 2008 (2008-03-06) * examples 1-12 * | 1-22 | |
| X | WO 2018/204466 A1 (HENKEL IP & HOLDING GMBH [DE]; HENKEL AG & CO KGAA [DE]; SUEN WU [US]) 8 November 2018 (2018-11-08) * paragraphs [0036], [0037] * | 1-22 | TECHNICAL FIELDS SEARCHED (IPC) |
| X | "Silylated Polyurethanes: Partially tipped systems", RESEARCH DISCLOSURE, KENNETH MASON PUBLICATIONS, HAMPSHIRE, UK, GB, vol. 618, no. 38, 1 October 2015 (2015-10-01), page 9, XP007144411, ISSN: 0374-4353 [retrieved on 2015-09-16] * pages 1,2 * | 23 | C08G |
| X | EP 2 957 582 A1 (HUNTSMAN INT LLC [US]; HUNTSMAN EUROP BVBA [BE]) 23 December 2015 (2015-12-23) * examples 1,2 * | 23 | |

-/--

The present search report has been drawn up for all claims

1

| Place of search | Date of completion of the search | Examiner |
|---|---|---|
| Munich | 11 October 2022 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 31 5103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/251204 A1 (BURCKHARDT URS [CH] ET AL) 16 October 2008 (2008-10-16) * paragraph [0085] * ----- | 23 | |
| X | US 11 242 428 B2 (SIKA TECH AG [CH]) 8 February 2022 (2022-02-08) * column 13, line 53 - column 14, line 8 * ----- | 23 | |
| X | US 4 374 237 A (BERGER MITCHELL H ET AL) 15 February 1983 (1983-02-15) * examples 1,3 * ----- | 6 | |
| X | EP 1 731 658 A1 (KANAGAWA YOSHINORI [JP] ET AL) 13 December 2006 (2006-12-13) * examples 1,5 * ----- | 6 | |
| X | WO 02/06367 A1 (ADCO PRODUCTS INC [US]) 24 January 2002 (2002-01-24) * example 1 * ----- | 6 | |

TECHNICAL FIELDS SEARCHED (IPC)

The present search report has been drawn up for all claims

1

| Place of search | Date of completion of the search | Examiner |
|---|---|---|
| Munich | 11 October 2022 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 31 5103

This annex lists the patent family members relating to the patent documents cited in the above-mentioned European search report. The members are as contained in the European Patent Office EDP file on The European Patent Office is in no way liable for these particulars which are merely given for the purpose of information.

11-10-2022

| Patent document cited in search report | Publication date | Patent family member(s) | Publication date |
|---|---|---|---|
| EP 0141025 A1 | 15-05-1985 | AU 2905584 A | 09-05-1985 |
| | | CA 1217193 A | 27-01-1987 |
| | | EP 0141025 A1 | 15-05-1985 |
| | | JP H02619 A | 05-01-1990 |
| | | JP H0357946 B2 | 03-09-1991 |
| | | JP H0681792 B2 | 19-10-1994 |
| | | JP H02209914 A | 21-08-1990 |
| | | JP S60104119 A | 08-06-1985 |
| | | US 4471102 A | 11-09-1984 |
| EP 0372264 A1 | 13-06-1990 | EP 0372264 A1 | 13-06-1990 |
| | | US 4879365 A | 07-11-1989 |
| EP 1721948 A2 | 15-11-2006 | EP 1721948 A2 | 15-11-2006 |
| | | US 2006251902 A1 | 09-11-2006 |
| US 2008058492 A1 | 06-03-2008 | CN 101600747 A | 09-12-2009 |
| | | EP 2057203 A2 | 13-05-2009 |
| | | JP 2010502779 A | 28-01-2010 |
| | | JP 2014012839 A | 23-01-2014 |
| | | TW 200838892 A | 01-10-2008 |
| | | US 2008058492 A1 | 06-03-2008 |
| | | WO 2008027496 A2 | 06-03-2008 |
| WO 2018204466 A1 | 08-11-2018 | CA 3061730 A1 | 08-11-2018 |
| | | EP 3619254 A1 | 11-03-2020 |
| | | US 2020063007 A1 | 27-02-2020 |
| | | WO 2018204466 A1 | 08-11-2018 |
| EP 2957582 A1 | 23-12-2015 | NONE | |
| US 2008251204 A1 | 16-10-2008 | AT 486900 T | 15-11-2010 |
| | | BR PI0616635 A2 | 28-06-2011 |
| | | BR PI0616775 A2 | 28-06-2011 |
| | | CA 2628327 A1 | 05-04-2007 |
| | | CA 2628329 A1 | 05-04-2007 |
| | | CN 101309946 A | 19-11-2008 |
| | | CN 101309947 A | 19-11-2008 |
| | | DK 1937741 T3 | 07-02-2011 |
| | | EP 1770107 A1 | 04-04-2007 |
| | | EP 1937740 A1 | 02-07-2008 |
| | | EP 1937741 A1 | 02-07-2008 |
| | | ES 2355273 T3 | 24-03-2011 |
| | | JP 5193047 B2 | 08-05-2013 |
| | | JP 5197370 B2 | 15-05-2013 |
| | | JP 2009510205 A | 12-03-2009 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 22 31 5103

This annex lists the patent family members relating to the patent documents cited in the above-mentioned European search report. The members are as contained in the European Patent Office EDP file on
The European Patent Office is in no way liable for these particulars which are merely given for the purpose of information.

11-10-2022

| Patent document cited in search report | Publication date | Patent family member(s) | Publication date |
|---|---|---|---|
| | | JP 2009510206 A | 12-03-2009 |
| | | KR 20080055978 A | 19-06-2008 |
| | | KR 20080063814 A | 07-07-2008 |
| | | US 2008251204 A1 | 16-10-2008 |
| | | US 2009159204 A1 | 25-06-2009 |
| | | WO 2007036574 A1 | 05-04-2007 |
| | | WO 2007036575 A1 | 05-04-2007 |
| | | ZA 200803687 B | 29-04-2009 |
| | | ZA 200803689 B | 25-03-2009 |
| US 11242428 B2 | 08-02-2022 | CN 108431067 A | 21-08-2018 |
| | | EP 3394134 A1 | 31-10-2018 |
| | | US 2018327535 A1 | 15-11-2018 |
| | | WO 2017108829 A1 | 29-06-2017 |
| US 4374237 A | 15-02-1983 | AT 19525 T | 15-05-1986 |
| | | AU 559164 B2 | 26-02-1987 |
| | | CA 1195797 A | 22-10-1985 |
| | | EP 0082528 A1 | 29-06-1983 |
| | | JP S627210 B2 | 16-02-1987 |
| | | JP S58109529 A | 29-06-1983 |
| | | US 4374237 A | 15-02-1983 |
| EP 1731658 A1 | 13-12-2006 | CN 1922356 A | 28-02-2007 |
| | | EP 1731658 A1 | 13-12-2006 |
| | | KR 20060127979 A | 13-12-2006 |
| | | TW I359890 B | 11-03-2012 |
| | | US 2007169887 A1 | 26-07-2007 |
| | | WO 2005083173 A1 | 09-09-2005 |
| WO 0206367 A1 | 24-01-2002 | AU 7539101 A | 30-01-2002 |
| | | BR 0112421 A | 08-07-2003 |
| | | CA 2414411 A1 | 24-01-2002 |
| | | MX PA02012908 A | 22-09-2003 |
| | | US 6498210 B1 | 24-12-2002 |
| | | WO 0206367 A1 | 24-01-2002 |

EPO FORM P0459

For more details about this annex : see Official Journal of the European Patent Office, No. 12/82

page 2 of 2